# EUROPÄISCHE PATENTSCHRIFT

(11) **EP 3 484 742 B1**
(45) Veröffentlichungstag und Bekanntmachung des Hinweises auf die Patenterteilung: **03.11.2021**
(21) Anmeldenummer: 17735544.3
(22) Anmeldetag: 06.07.2017
(51) Int. Cl.: B60N 2/07

(54) **LÄNGSEINSTELLER SOWIE FAHRZEUGSITZ**
LONGITUDINAL ADJUSTER AND VEHICLE SEAT
DISPOSITIF DE RÉGLAGE LONGITUDINAL ET SIÈGE DE VÉHICULE

(30) Priorität: 14.07.2016 DE 102016212907; 19.09.2016 DE 102016217848
(43) Veröffentlichungstag der Anmeldung: 22.05.2019
(73) Patentinhaber: KEIPER Seating Mechanisms Co., Ltd., Shanghai 201315 (CN)
(72) Erfinder: EMRICH, Holger, 66887 Erdesbach (DE); KOENIG, Michael, 67688 Rodenbach (DE); REISCHMANN, Martin, 66989 Hoehfroeschen (DE); VELTEN, Ralf, Heltersberg 67716 (DE)
(74) Vertreter: Liedtke & Partner Patentanwälte
(86) Internationale Anmeldenummer: PCT/EP2017/066922
(87) Internationale Veröffentlichungsnummer: WO 2018/011051

(56) Entgegenhaltungen:
- DE-A1-102013 205 096
- JP-A- S6 218 348

## Beschreibung

Die Erfindung betrifft einen Längseinsteller mit den Merkmalen des Oberbegriffs des Anspruchs 1 sowie einen Fahrzeugsitz.

### Stand der Technik

Aus der DE 10 2012 015 343 A1 sowie der DE 10 2013 205 096 A1 sind je ein gattungsgemäßer Längseinsteller sowie ein gattungsgemäßer Fahrzeugsitz bekannt. Der Längseinsteller umfasst zwei relativ zueinander verschiebbare Sitzschienen, nämlich eine Oberschiene und eine Unterschiene, welche einander wechselseitig umgreifen. Eine untere Klammer ist mit der Unterschiene verbunden, wobei die untere Klammer einen unteren Sperrbereich aufweist. Ein oberer Sperrbereich kann in einer mit der Oberschiene verbundenen oberen Klammer oder in einem mit der Oberschiene verbundenen Sitzrahmenseitenteil ausgebildet sein. Der untere Sperrbereich und der obere Sperrbereich sind im Normalfall voneinander beabstandet und verhaken im Crashfall miteinander. In einem Crashfall auftretende Kräfte werden dann zusätzlich über die besagten Klammern von dem Fahrzeugsitz in die Fahrzeugstruktur eingeleitet.

Aus der JP S62 18348 A ist ein Fahrzeugsitz bekannt, welcher eine an einer oberen Schiene befestigte Befestigungsklammer mit einem oberen Sperrbereich aufweist. Eine untere Klammer ist mit der Unterschiene verbunden, wobei die untere Klammer einen unteren Sperrbereich aufweist. Die Befestigungsklammer steht in Schienenlängsrichtung betrachtet, in einem von dem hinteren Schienenende beabstandeten Bereich, seitlich nach oben ab und dient einer Befestigung eines Gurtschlosses.

### Aufgabe

Der Erfindung liegt die Aufgabe zu Grunde, einen Längseinsteller der eingangs genannten Art zu verbessern, insbesondere die Festigkeit des Längseinstellers im Crashfall zu erhöhen, sowie einen entsprechenden Fahrzeugsitz bereitzustellen.

### Lösung

Diese Aufgabe wird erfindungsgemäß gelöst durch einen Längseinsteller für einen Fahrzeugsitz, insbesondere Kraftfahrzeugsitz, aufweisend mindestens ein Schienenpaar, welches aus einer ersten Sitzschiene, insbesondere zur Verbindung mit einem Sitzrahmenseitenteil, und einer zweiten Sitzschiene, insbesondere zur Verbindung mit einer Fahrzeugstruktur, gebildet ist. Die Sitzschienen des Schienenpaares sind in Längsrichtung relativ zueinander verschiebbar und umgreifen unter Bildung eines Innenkanals einander wechselseitig. An der ersten Sitzschiene ist ein erstes Klammerelement fixiert und an der zweiten Sitzschiene ist ein zweites Klammerelement fixiert. Das erste Klammerelement und das zweite Klammerelement sind im Normalfall voneinander beabstandet und verhaken in Reaktion auf eine vorgegebene Krafteinwirkung, beispielsweise im Crashfall, miteinander, insbesondere greifen ineinander ein. Das erste Klammerelement weist einen Verbindungsabschnitt auf, welcher mit einer nach hinten gerichteten Oberfläche eines Sitzrahmenseitenteils verbindbar ist.

Dadurch, dass das erste Klammerelement einen Verbindungsabschnitt aufweist, welcher mit einer nach hinten gerichteten Oberfläche eines Sitzrahmenseitenteils verbindbar ist, lässt sich eine vertikale Krafteinwirkung durch eine Belastung des Sitzrahmenseitenteils im Crashfall besonders gut auf das Verstärkungsprofil weiterleiten, wodurch nach einem Verhaken des Verstärkungsprofils und des Ankers eine Überbeanspruchung des Schienenpaares verhindert ist. Folglich ist die Festigkeit des Längseinstellers im Crashfall erhöht. Unter der "nach hinten gerichteten Oberfläche" wird insbesondere eine Oberfläche des Sitzrahmenseitenteils bezeichnet, welche eine im Wesentlichen parallel zur Längsrichtung verlaufende Normale aufweist. Unter dem "Sitzrahmenseitenteil" wird allgemein auch ein Bauteil eines tragenden Strukturbauteils eines Sitzteils, ein Querprofil, ein Verstärkungselement des Sitzrahmens, oder dergleichen verstanden.

Vorteilhafte Ausgestaltungen, welche einzeln oder in Kombination miteinander eingesetzt werden können, sind Gegenstand der Unteransprüche.

Der Verbindungsabschnitt kann ferner einteilig mit dem ersten Klammerelement ausgestaltet sein. Der Verbindungsabschnitt kann um eine in Querrichtung verlaufende Biegeachse nach oben umgebogen sein. Der Verbindungsabschnitt kann um ca. 90° um eine in Querrichtung verlaufende Biegeachse nach oben umgebogen sein. Der Verbindungsabschnitt kann annähernd senkrecht von einem Grundkörper des ersten Klammerelements abstehen. Das zweite Klammerelement kann integral mit einem fahrzeugspezifischen Anbindungsadapter, bzw. Schienen-Boden-Adapter zur Anpassung an ein strukturseitiges Verbindungsprofil ausgestaltet sein.

Das erste und zweite Klammerelement können bevorzugt aus Metall, insbesondere aus einem Metallblech, gefertigt sein. Das erste Klammerelement kann beispielsweise bei einem auf einem Schienenpaar vormontierten Fahrzeugsitz von hinten auf das hintere Ende zwischen die erste Sitzschiene und das Sitzrahmenseitenteil einschiebbar sein. Das erste Klammerelement kann mittels eines Fixierelements in einer nach hinten gerichteten Oberfläche des Sitzrahmenseitenteils gehalten sein. Das Fixierelement kann beispielsweise ein Niet oder eine Schraubverbindung sein.

In dem Verbindungsabschnitt und der nach hinten gerichteten Oberfläche kann zur Verbindung mittels des Fixierelements jeweils eine Durchgangsbohrung vorgesehen sein. Der Verbindungsabschnitt kann oberhalb und unterhalb einer Durchgangsbohrung jeweils eine Ausnehmung aufweisen. Das Sitzrahmenseitenteil kann oberhalb und unterhalb der Durchgangsbohrung einen Vorsprung aufweisen. In montiertem Zustand können die Vorsprünge des Sitzrahmenseitenteils in die Ausnehmungen des Verbindungsabschnitts des ersten Klammerelements eingreifen. Alternativ kann der Verbindungsabschnitt oberhalb und unterhalb der Durchgangsbohrung jeweils einen Vorsprung und das Sitzrahmenseitenteil oberhalb und unterhalb der Durchgangsbohrung eine Ausnehmung aufweisen, wobei die Vorsprünge des Verbindungsabschnitts des ersten Klammerelements in montiertem Zustand in die Ausnehmungen des Sitzrahmenseitenteils eingreifen.

Ein Durchmesser der Durchgangsbohrung im Verbindungsabschnitt kann geringfügig größer sein, als ein Durchmesser der Durchgangsbohrung im Sitzrahmenseitenteil. Zwischen dem Fixierelement und dem Verbindungsabschnitt kann ein Spalt gebildet sein. Das Fixierelement kann das erste Klammerelement an dem Sitzrahmenseitenteil lediglich in Längsrichtung halten. Senkrecht zur Längsrichtung kann das montierte erste Klammerelement ein geringfügiges Spiel aufweisen.

Die Vorsprünge des Sitzrahmenseitenteils können aus der nach hinten gerichteten Oberfläche nach hinten, beispielsweise mittels Freischneidens und Umbiegens, ausgestellt sein. Die Vorsprünge können aus der nach hinten gerichteten Oberfläche ausgeprägt oder mit der nach hinten gerichteten Oberfläche verbunden sein, insbesondere an die nach hinten gerichtete Oberfläche angeschweißt sein.

Die Vorsprünge können im Bereich einer oberen Kante mit einem oberen Randabschnitt der Ausnehmungen in Eingriff bringbar sein. Eine Kraft in Vertikalrichtung kann über den Verbindungsabschnitt in das erste Klammerelement einleitbar und nach einem Verkrallen der Klammerelemente miteinander, unmittelbar weiter über das zweite Klammerelement in die Fahrzeugstruktur einleitbar sein.

Eine Anbindung des Verbindungsabschnitts an den restlichen Körper des ersten Klammerelements kann im Wesentlichen über die gesamte Breite des Klammerelements, insbesondere die gesamte Erstreckung in Querrichtung, erfolgen, wodurch eine Belastbarkeit der Verbindung zwischen dem Sitzrahmenseitenteil und dem ersten Klammerelement erhöht ist. Ferner kann die abzuleitende Kraft relativ zu einer Querrichtung symmetrisch in einen in Längsrichtung betrachtet linken und rechten Teil des ersten Klammerelements einleitbar sein.

Die Aufgabe wird ferner gelöst durch einen Fahrzeugsitz mit einem Längseinsteller gemäß vorstehender Beschreibung, wobei der Fahrzeugsitz ein Sitzrahmenseitenteil aufweist, welches mit einer ersten Sitzschiene verbunden ist. Der erfindungsgemäße Fahrzeugsitz weist folglich die gleichen Vorteile auf, wie die zuvor beschriebenen Ausgestaltungen des Längseinstellers.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines erfindungsgemäßen Fahrzeugsitzes mit einem erfindungsgemäßen Längseinsteller,
- Fig. 2:: eine ausschnittsweise vergrößerte Ansicht auf ein hinteres Ende des Längseinstellers,
- Fig. 3:: eine Ansicht auf das hintere Ende des Längseinstellers gemäß Fig. 2 ohne ein Fixierelement,
- Fig. 4:: eine Ansicht auf das hintere Ende des Längseinstellers gemäß Fig. 3 ohne ein erstes Klammerelement, und
- Fig. 5:: eine ausschnittsweise Schnittdarstellung senkrecht zu einer Querrichtung durch den Längseinsteller von Fig. 2.

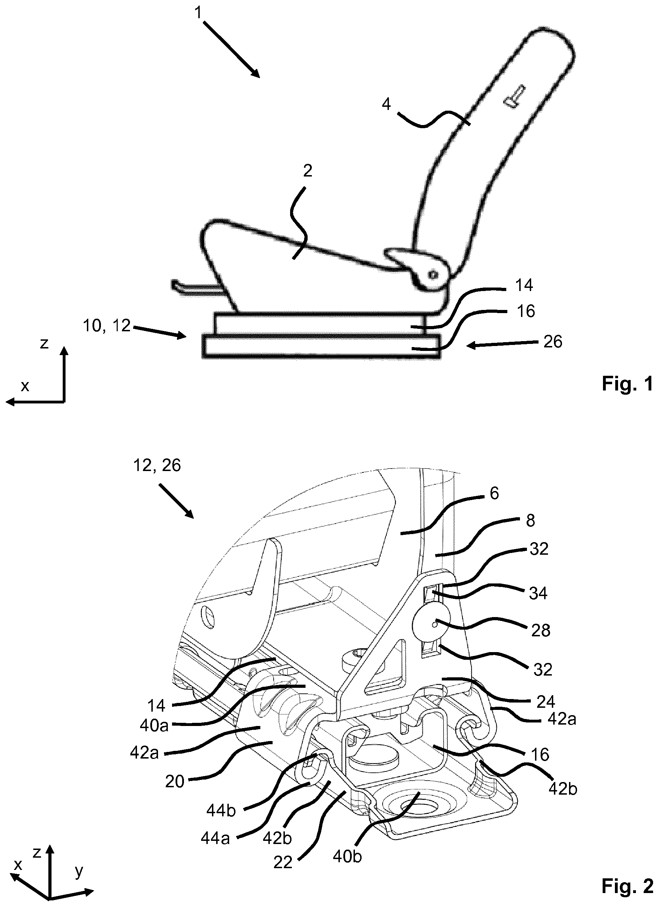

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrechtstehender Lehne 4 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 2 und eine relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert. Der Längseinsteller 10 weist ein Schienenpaar 12 auf. Das Schienenpaar 12 ist aus einer ersten Sitzschiene 14, insbesondere zur Verbindung mit einem Sitzrahmenseitenteil 6, und einer zweiten Sitzschiene 16, insbesondere zur Verbindung mit einer Fahrzeugstruktur, gebildet. Die Sitzschienen 14, 16 des Schienenpaares 12 sind in Längsrichtung x relativ zueinander verschiebbar.

Fig. 2 zeigt eine ausschnittsweise vergrößerte Ansicht auf ein hinteres Ende 26 des Längseinstellers 10. Die Sitzschienen 14, 16 des Schienenpaares 12 umgreifen einander wechselseitig, wobei an der ersten Sitzschiene 14 ein erstes Klammerelement 20 fixiert ist und an der zweiten Sitzschiene 16 ein zweites Klammerelement 22 fixiert ist. Das erste Klammerelement 20 weist einen Grundkörper auf, welcher im Querschnitt annähernd U-förmig gestaltet ist. Der Grundkörper des ersten Klammerelements 20 umfasst einen Steg 40a, welcher wenigstens abschnittsweise zwischen der ersten Sitzschiene 14 und dem Sitzrahmenseitenteil 6 angeordnet ist. Ferner weist der Grundkörper des ersten Klammerelements 20 einen ersten Schenkel 42a und einen zweiten Schenkel 42a auf. Die beiden Schenkel 42a sind an ihren oberen Enden durch den in Querrichtung y verlaufenden Steg 40a miteinander verbunden. Die Schenkel 42a verlaufen annähernd symmetrisch zueinander und zur Vertikalrichtung z geneigt nach unten. Die Schenkel 42a sind an ihren unteren Enden unter Bildung eines hakenförmigen Abschnitts 44a durch zweifaches Biegen um etwa 180° um eine Biegeachse parallel zur Längsrichtung x umgebogen, vorliegend nach innen umgebogen. Das zweite Klammerelement 22 ist im Querschnitt annähernd U-förmig gestaltet und umfasst einen Steg 40b, welcher an der zweiten Sitzschiene 16 befestigt ist, sowie einen ersten Schenkel 42b und einen zweiten Schenkel 42b. Die beiden Schenkel 42b sind an ihren unteren Enden durch den in Querrichtung y verlaufenden Steg 40b miteinander verbunden. Die Schenkel 42b verlaufen annähernd symmetrisch zur Vertikalrichtung z geneigt nach oben. Die Schenkel 42b sind an ihren oberen Enden unter Bildung eines hakenförmigen Abschnitts 44b durch zweifaches Biegen um etwa 180° um eine Biegeachse parallel zur Längsrichtung x umgebogen, vorliegend nach außen umgebogen. Die hakenförmigen Abschnitte 44a des ersten Klammerelements 20 und die hakenförmigen Abschnitte 44b des ersten Klammerelements 22 umgreifen einander wechselseitig.

Das erste Klammerelement 20 und das zweite Klammerelement 22 sind im Normalfall voneinander beabstandet und verhaken in Reaktion auf eine vorgegebene Krafteinwirkung, beispielsweise im Crashfall, miteinander, insbesondere greifen ineinander ein. Das erste Klammerelement 20 weist einen Verbindungsabschnitt 24 auf, welcher mit einem hinteren Ende 26, insbesondere mit einer nach hinten gerichteten Oberfläche 8, eines Sitzrahmenseitenteils 6 verbunden ist. Unter der "nach hinten gerichteten" Oberfläche 8 wird insbesondere die Oberfläche 8 des Sitzrahmenseitenteils 6 bezeichnet, welche eine im Wesentlichen parallel zur Längsrichtung x verlaufende Normale aufweist, oder welche parallel zu einer y-z-Ebene verläuft. Der Verbindungsabschnitt 24 ist vorliegend einteilig mit dem ersten Klammerelement 20 ausgestaltet. Der Verbindungsabschnitt 24 ist vorliegend um ca. 90° nach oben umgebogen und steht annähernd senkrecht von einem restlichen Grundkörper des ersten Klammerelements 20 ab. Das zweite Klammerelement 22 kann beispielsweise integral mit einem fahrzeugspezifischen Anbindungsadapter zur Anpassung an ein strukturseitiges Verbindungsmaß ausgestaltet sein.

Das erste und zweite Klammerelement 20, 22 ist bevorzugt aus Metall, insbesondere aus einem Metallblech, gefertigt. Das erste Klammerelement 20 kann beispielsweise bei einem auf einem Schienenpaar 12 vormontierten Fahrzeugsitz 1 von hinten im Bereich des hinteren Endes 26 zwischen die erste Sitzschiene 14 und das Sitzrahmenseitenteil 6 eingeschoben werden. Das erste Klammerelement 20 ist mittels eines Fixierelements 28 in der nach hinten gerichteten Oberfläche 8 des Sitzrahmenseitenteils 6 gehalten. Das Fixierelement 28 kann beispielsweise ein Niet sein. Das Fixierelement 28 kann ebenso mittels einer Schraubverbindung bereitgestellt sein. Zusätzlich kann eine weitere Schraubverbindung an dem Sitzrahmenseitenteil 6 in Vertikalrichtung z durch das erste Klammerelement 20 und die erste Sitzschiene 14 angeordnet sein.

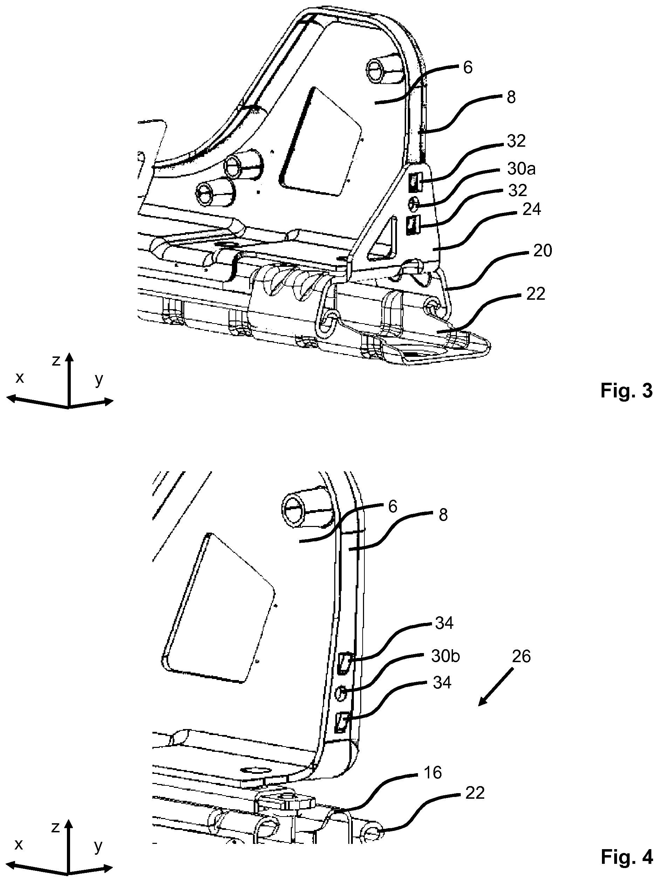

In Fig. 3 ist der Längseinsteller 10 gemäß Fig. 2 ohne das Fixierelement 28 und in Fig. 4 ohne das erste Klammerelement 20 dargestellt. In dem Verbindungsabschnitt 24 und der nach hinten gerichteten Oberfläche 8 zur Verbindung mit dem Fixierelement 28 ist jeweils eine Durchgangsbohrung 30a, 30b vorgesehen. Der Verbindungsabschnitt 24 weist oberhalb und unterhalb der Durchgangsbohrung 30a jeweils eine Ausnehmung 32 auf. Das Sitzrahmenseitenteil 6 weist oberhalb und unterhalb der Durchgangsbohrung 30b einen Vorsprung 34 auf. In montiertem Zustand greifen die Vorsprünge 34 des Sitzrahmenseitenteils 6 in die Ausnehmungen 32 des Verbindungsabschnitts 24 des ersten Klammerelements 20 ein.

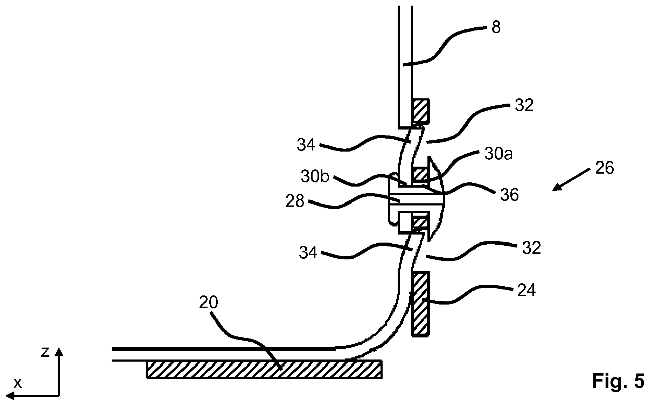

Fig. 5 zeigt eine ausschnittsweise Schnittdarstellung senkrecht zu einer Querrichtung y durch den Längseinsteller 10 von Fig. 2. Der Durchmesser der Durchgangsbohrung 30a ist im Verbindungsabschnitt 24 geringfügig größer als der Durchmesser der Durchgangsbohrung 30b im Sitzrahmenseitenteil 6. Dies führt zu einem Spalt 36 zwischen dem Fixierelement 28 und dem Verbindungsabschnitt 24. Das Fixierelement 28 hält das erste Klammerelement 20 an dem Sitzrahmenseitenteil 6 lediglich in Längsrichtung x. Senkrecht zur Längsrichtung x hat das montierte erste Klammerelement 20 ein geringfügiges Spiel.

Die Vorsprünge 34 des Sitzrahmenseitenteils 6 sind vorliegend aus der nach hinten gerichteten Oberfläche 8 nach hinten ausgestellt, beispielsweise mittels Freischneidens und Umbiegens. Ebenfalls können die Vorsprünge 34 auch ausgeprägt oder an die nach hinten gerichtete Oberfläche 8 befestigt, insbesondere angeschweißt sein.

Im Falle einer übermäßigen Krafteinwirkung von hinten auf die Lehne 4 des Fahrzeugsitzes 1, wie dies beispielsweise durch ein ungesichertes, auf die Lehne 4 aufprallendes Transportgut im Crashfall hervorgerufen werden kann, wird ein Anheben des hinteren Endes 26 des Fahrzeugsitzes 1 und des Sitzrahmenseitenteils 6 in Vertikalrichtung z nach oben bewirkt. Bei dieser Belastung des Fahrzeugsitzes 1 gelangen jeweils eine obere Kante der Vorsprünge 34 mit einem oberen Randabschnitt der Ausnehmungen 32 in Eingriff. Hierbei ist es vorgesehen, dass Kräfte in Vertikalrichtung z über den Verbindungsabschnitt 24 in das erste Klammerelement 20 eingeleitet und nach einem Verkrallen der Klammerelemente 20, 22 miteinander, unmittelbar weiter über das zweite Klammerelement 20 in die Fahrzeugstruktur eingeleitet werden können. Eine Belastung der ersten und zweiten Sitzschienen 14, 16 in Vertikalrichtung z wird größtenteils vermieden, wodurch ferner eine überlastbedingte Verformung der Sitzschienen 14, 16 bis hin zu einem sogenannten Ausschälen verhindert ist.

Die Anbindung des Verbindungsabschnitts 24 an den restlichen Körper des ersten Klammerelements 20 erfolgt bevorzugt über im Wesentlichen die gesamte Breite des Klammerelements 20, insbesondere die gesamte Erstreckung in Querrichtung y, wodurch eine Belastbarkeit der Verbindung zwischen dem Sitzrahmenseitenteil 6 und dem ersten Klammerelement 20 erhöht ist. Ferner ist die abzuleitende Kraft relativ zu einer Querrichtung y symmetrisch in einen in Längsrichtung y betrachtet linken und rechten Teil des ersten Klammerelements 20 einleitbar.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren insofern diese unter den Schutzumfang der Ansprüche fallen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Sitzrahmenseitenteil
- 8: Oberfläche
- 10: Längseinsteller
- 12: Schienenpaar
- 14: erste Sitzschiene
- 16: zweite Sitzschiene
- 20: erstes Klammerelement
- 22: zweites Klammerelement
- 24: Verbindungsabschnitt
- 26: hinteres Ende
- 28: Fixierelement
- 30a: Durchgangsbohrung
- 30b: Durchgangsbohrung
- 32: Ausnehmung
- 34: Vorsprung
- 36: Spalt
- 40a, 40b: Steg
- 42a, 42b: Schenkel
- 44a, 44b: hakenförmiger Abschnitt
- x: Längsrichtung
- y: Querrichtung
- z: Vertikalrichtung

## Patentansprüche

1. Längseinsteller (10) für einen Fahrzeugsitz (1), insbesondere Kraftfahrzeugsitz, aufweisend mindestens ein Schienenpaar (12), welches aus einer ersten Sitzschiene (14), insbesondere zur Verbindung mit einem Sitzrahmenseitenteil (6), und einer zweiten Sitzschiene (16), insbesondere zur Verbindung mit einer Fahrzeugstruktur, gebildet ist, wobei die Sitzschienen (14, 16) des Schienenpaares (12) in Längsrichtung (x) relativ zueinander verschiebbar sind und einander wechselseitig umgreifen, wobei an der ersten Sitzschiene (14) ein erstes Klammerelement (20) fixiert ist und an der zweiten Sitzschiene (16) ein zweites Klammerelement (22) fixiert ist, wobei das erste Klammerelement (20) und das zweite Klammerelement (22) im Normalfall voneinander beabstandet sind und in Reaktion auf eine vorgegebene Krafteinwirkung, beispielsweise im Crashfall, miteinander verhaken, insbesondere ineinander eingreifen,
**dadurch gekennzeichnet, dass**
das erste Klammerelement (20) einen Verbindungsabschnitt (24) aufweist, welcher mit einer nach hinten gerichteten Oberfläche (8) eines Sitzrahmenseitenteils (6) verbindbar ist.

2. Längseinsteller (10) gemäß Anspruch 1, wobei der Verbindungsabschnitt (24) einteilig mit dem ersten Klammerelement (20) ausgestaltet ist.

3. Längseinsteller (10) gemäß einem der Ansprüche 1 oder 2, wobei der Verbindungsabschnitt (24) um eine in Querrichtung (y) verlaufende Biegeachse nach oben umgebogen ist, insbesondere um ca. 90° um eine in Querrichtung (y) verlaufende Biegeachse nach oben umgebogen ist.

4. Längseinsteller (10) gemäß einem der Ansprüche 1 bis 3, wobei der Verbindungsabschnitt (24) annähernd senkrecht von einem Grundkörper des ersten Klammerelements (20) absteht.

5. Längseinsteller (10) gemäß einem der Ansprüche 1 bis 4, wobei das zweite Klammerelement (22) integral mit einem fahrzeugspezifischen Anbindungsadapter, bzw. Schienen-Boden-Adapter zur Anpassung an ein strukturseitiges Verbindungsprofil ausgestaltet ist.

6. Längseinsteller (10) gemäß einem der Ansprüche 1 bis 5, wobei das erste Klammerelement (20) bei einem auf einem Schienenpaar (12) vormontierten Fahrzeugsitz (1) von hinten im Bereich eines hinteren Endes (26) zwischen die erste Sitzschiene (14) und das Sitzrahmenseitenteil (6) einschiebbar ist.

7. Längseinsteller (10) gemäß einem der Ansprüche 1 bis 6, wobei das erste Klammerelement (20) mittels eines Fixierelements (28) in einer nach hinten gerichteten Oberfläche (8) des Sitzrahmenseitenteils (6) gehalten ist.

8. Längseinsteller (10) gemäß Anspruch 7, wobei das Fixierelement (28) ein Niet oder eine Schraubverbindung ist

9. Längseinsteller (10) gemäß einem der Ansprüche 7 oder 8, wobei in dem Verbindungsabschnitt (24) und der nach hinten gerichteten Oberfläche (8) zur Verbindung mittels des Fixierelements (28) jeweils eine Durchgangsbohrung (30a, 30b) vorgesehen ist.

10. Längseinsteller (10) gemäß Anspruch 9, wobei ein Durchmesser der Durchgangsbohrung (30a) im Verbindungsabschnitt (24) geringfügig größer ist, als ein Durchmesser der Durchgangsbohrung (30b) im Sitzrahmenseitenteil (6).

11. Längseinsteller (10) gemäß einem der Ansprüche 7 bis 10, wobei zwischen dem Fixierelement (28) und dem Verbindungsabschnitt (24) ein Spalt (36) gebildet ist.

12. Längseinsteller (10) gemäß einem der Ansprüche 1 bis 11, wobei senkrecht zur Längsrichtung (x) das montierte erste Klammerelement (20) ein geringfügiges Spiel aufweist.

13. Längseinsteller (10) gemäß einem der Ansprüche 1 bis 12, wobei der Verbindungsabschnitt (24) eine Ausnehmung (32) und das Sitzrahmenseitenteil (6) einen Vorsprung (34) aufweist, wobei in montiertem Zustand der Vorsprung (34) des Sitzrahmenseitenteils (6) in die Ausnehmung (32) des Verbindungsabschnitts (24) des ersten Klammerelements (20) eingreift.

14. Längseinsteller (10) gemäß einem der Ansprüche 1 bis 12 wobei der Verbindungsabschnitt (24) einen Vorsprung (34) und das Sitzrahmenseitenteil (6) eine Ausnehmung (32) aufweist, wobei in montiertem Zustand der Vorsprung (34) des Verbindungsabschnitts (24) des ersten Klammerelements (20) in die Ausnehmung (32) des Sitzrahmenseitenteils (6) eingreift.

15. Fahrzeugsitz (1) mit einem Längseinsteller (10) nach einem der vorhergehenden Ansprüche, wobei der Fahrzeugsitz (1) ein Sitzrahmenseitenteil (6) aufweist, welches mit einer ersten Sitzschiene (14) verbunden ist.

## Claims

1. Longitudinal adjuster (10) for a vehicle seat (19), in particular a motor vehicle seat, having at least one pair of rails (12) which is formed from a first seat rail (14), in particular for connection to a seat frame side part (6), and a second seat rail (16), in particular for connection to a vehicle structure, the seat rails (14, 16) of the pair of rails (12) being displaceable relative to one another in the longitudinal direction (x) and mutually engaging around one another, wherein a first clamp element (20) is fixed to the first seat rail (14) and a second clamp element (22) is fixed to the second seat rail (16), wherein the first clamp element (20) and the second clamp element (22) are spaced apart from one another in the normal case and, in response to a predetermined force action, for example in the event of a crash, they hook together, in particular engage in one another, **characterized in that** the first clamp element (20) has a connecting section (24) which can be connected to a rearwardly directed surface (8) of a seat frame side part (6) .

2. Longitudinal adjuster (10) according to claim 1, wherein said connecting portion (24) is formed integrally with said first clamp member (20).

3. Longitudinal adjuster (10) according to one of claims 1 or 2, wherein the connecting portion (24) is bent upwardly about a bending axis extending in the transverse direction (y), in particular is bent upwardly by approximately 90° about a bending axis extending in the transverse direction (y).

4. Longitudinal adjuster (10) according to any one of claims 1 to 3, wherein the connecting portion (24) protrudes approximately perpendicularly from a base body of the first clamp member (20).

5. Longitudinal adjuster (10) according to any one of claims 1 to 4, wherein the second clamp element (22) is integrally designed with a vehicle-specific connection adapter, or rail-to-floor adapter, for adaptation to a structure-side connection profile.

6. Longitudinal adjuster (10) according to any one of claims 1 to 5, wherein the first clamp element (20) can be inserted between the first seat rail (14) and the seat frame side part (6) from behind in the region of a rear end (26) in the case of a vehicle seat (1) preassembled on a pair of rails (12).

7. Longitudinal adjuster (10) according to any one of claims 1 to 6, wherein the first clamp member (20) is retained in a rearwardly facing surface (8) of the seat frame side member (6) by means of a fixing member (28).

8. Longitudinal adjuster (10) according to claim 7, wherein the fixing element (28) is a rivet or a screw connection.

9. Longitudinal adjuster (10) according to any one of claims 7 or 8, wherein a through hole (30a, 30b) is provided in each of the connecting portion (24) and the rearwardly facing surface (8) for connection by means of the fixing member (28) .

10. Longitudinal adjuster (10) according to claim 9, wherein a diameter of the through hole (30a) in the connecting portion (24) is slightly larger than a diameter of the through hole (30b) in the seat frame side portion (6).

11. Longitudinal adjuster (10) according to any one of claims 7 to 10, wherein a gap (36) is formed between the fixing member (28) and the connecting member (24).

12. Longitudinal adjuster (10) according to any one of claims 1 to 11, wherein perpendicular to the longitudinal direction (x) the mounted first clamp element (20) has a slight play.

13. Longitudinal adjuster (10) according to any one of claims 1 to 12, wherein the connecting portion (24) has a recess (32) and the seat frame side member (6) has a projection (34), wherein in the assembled state the projection (34) of the seat frame side member (6) engages in the recess (32) of the connecting portion (24) of the first clamp element (20) .

14. Longitudinal adjuster (10) according to any one of claims 1 to 12, wherein the connecting portion (24) has a projection (34) and the seat frame side part (6) has a recess (32), wherein in the assembled state the projection (34) of the connecting portion (24) of the first clamp element (20) engages in the recess (32) of the seat frame side part (6).

15. Vehicle seat (1) having a longitudinal adjuster (10) according to any one of the preceding claims, wherein the vehicle seat (1) comprises a seat frame side member (6) connected to a first seat rail (14).

## Revendications

1. Dispositif de réglage longitudinal (10) pour un siège de véhicule (19), en particulier un siège de véhicule automobile, avec au moins une paire de rails (12) qui est formée d'un premier rail de siège (14), en particulier pour la liaison avec une partie latérale de cadre de siège (6), et d'un deuxième rail de siège (16), en particulier pour la liaison avec une structure de véhicule, les rails de siège (14, 16) de la paire de rails (12) étant déplaçables l'un par rapport à l'autre dans la direction longitudinale (x) et s'entourant l'un l'autre, dans lequel un premier élément de serrage (20) est fixé au premier rail de siège (14) et un second élément de serrage (22) est fixé au second rail de siège (16), dans lequel le premier élément de serrage (20) et le second élément de serrage (22) sont espacés l'un de l'autre dans le cas normal et, en réponse à une action de force prédéterminée, par exemple en cas de collision, se verrouillent l'un avec l'autre, en particulier s'engager l'un dans l'autre, **caractérisé en ce que** le premier élément de serrage (20) présente une section de connexion (24) qui peut être connectée à une surface (8) dirigée vers l'arrière d'une partie latérale de cadre de siège (6).

2. Dispositif de réglage longitudinal (10) selon la revendication 1, dans lequel la section de connexion (24) est formée d'un seul tenant avec le premier élément de serrage (20).

3. Dispositif de réglage longitudinal (10) selon l'une quelconque des revendications 1 ou 2, dans lequel la section de connexion (24) est pliée vers le haut autour d'un axe de pliage s'étendant dans la direction transversale (y), en particulier est pliée vers le haut d'environ 90° autour d'un axe de pliage s'étendant dans la direction transversale (y).

4. Dispositif de réglage longitudinal (10) selon l'une quelconque des revendications 1 à 3, dans lequel la section de connexion (24) fait saillie sensiblement perpendiculairement d'un corps de base du premier élément de serrage (20).

5. Dispositif de réglage longitudinal (10) selon l'une des revendications 1 à 4, dans lequel le deuxième élément de serrage (22) est conçu d'un seul tenant avec un adaptateur de raccordement spécifique au véhicule ou un adaptateur rail-plancher pour l'adaptation à un profil de raccordement côté structure.

6. Dispositif de réglage longitudinal (10) selon l'une des revendications 1 à 5, dans lequel le premier élément de serrage (20) peut être inséré par l'arrière dans la zone d'une extrémité arrière (26) entre le premier rail de siège (14) et la partie latérale du cadre de siège (6) dans le cas d'un siège de véhicule (1) prémonté sur une paire de rails (12).

7. Dispositif de réglage longitudinal (10) selon l'une quelconque des revendications 1 à 6, dans lequel le premier élément de serrage (20) est maintenu au moyen d'un élément de fixation (28) dans une surface (8) dirigée vers l'arrière de la partie latérale du cadre de siège (6).

8. Dispositif de réglage longitudinal (10) selon la revendication 7, dans lequel l'élément de fixation (28) est un rivet ou une vis.

9. Dispositif de réglage longitudinal (10) selon l'une des revendications 7 ou 8, dans lequel un trou traversant (30a, 30b) est prévu dans chacune de la section de connexion (24) et de la surface dirigée vers l'arrière (8) pour la liaison au moyen de l'élément de fixation (28).

10. Dispositif de réglage longitudinal (10) selon la revendication 9, dans lequel un diamètre du trou traversant (30a) dans la section de connexion (24) est légèrement plus grand qu'un diamètre du trou traversant (30b) dans la partie latérale du cadre de siège (6).

11. Dispositif de réglage longitudinal (10) selon l'une quelconque des revendications 7 à 10, dans lequel un espace (36) est formé entre l'organe de fixation (28) et la section de connexion (24).

12. Dispositif de réglage longitudinal (10) selon l'une quelconque des revendications 1 à 11, dans lequel le premier élément de serrage (20) monté présente un léger jeu perpendiculaire à la direction longitudinale (x).

13. Dispositif de réglage longitudinal (10) selon l'une des revendications 1 à 12, dans lequel la section de connexion (24) présente un évidement (32) et la partie latérale de cadre de siège (6) présente une saillie (34), la saillie (34) de la partie latérale de cadre de siège (6) s'engageant, à l'état monté, dans l'évidement (32) de la section de connexion (24) du premier élément de serrage (20) .

14. Dispositif de réglage longitudinal (10) selon l'une des revendications 1 à 12, dans lequel la section de connexion (24) présente une saillie (34) et la partie latérale de cadre de siège (6) présente un évidement (32), dans lequel, à l'état monté, la saillie (34) de la section de connexion (24) du premier élément de serrage (20) s'engage dans l'évidement (32) de la partie latérale de cadre de siège (6) .

15. Siège de véhicule (1) avec un dispositif de réglage longitudinal (10) selon l'une des revendications précédentes, le siège de véhicule (1) présentant une partie latérale de cadre de siège (6) qui est reliée à un premier rail de siège (14).
